# EUROPÄISCHE PATENTSCHRIFT

(11) **EP 0 924 273 B1**
(45) Veröffentlichungstag und Bekanntmachung des Hinweises auf die Patenterteilung: **20.06.2001**
(21) Anmeldenummer: 98122497.5
(22) Anmeldetag: 27.11.1998
(51) Int. Cl.: C09D 13/00

(54) **Farbstiftmine**
Colour pencil lead
Mine de crayon de couleur

(30) Priorität: 18.12.1997 DE 19756401
(43) Veröffentlichungstag der Anmeldung: 23.06.1999
(73) Patentinhaber: A.W. Faber- Castell Unternehmensverwaltung GmbH & Co., 90547 Stein (DE)
(72) Erfinder: Lugert, Gerhard Dr., 90431 Nürnberg (DE)
(74) Vertreter: Mörtel, Alfred, Dr. Dipl.-Phys.

(56) Entgegenhaltungen:
- EP-A- 0 017 889
- US-A- 3 627 546
- US-A- 3 957 495

## Beschreibung

Die Erfindung betrifft eine Farbstiftmine oder eine Kreide mit einer zumindest teilweise wasserlöslichen oder in Wasser suspendierbaren, ein Farbmittel, beispielsweise einen wasserlöslichen Farbstoff enthaltenden Grundmasse. Wenn hier von Farbstiftmine gesprochen wird, so ist darunter auch eine Kreide zu verstehen. Die mit einer solchen Mine erzeugten Abstriche lassen sich aquarellieren, d.h. sie lassen sich mit Wasser auf einem Blatt flächig verteilen bzw. vermalen.

Aufgabe der Erfindung ist es, eine Farbstiftmine oder eine Kreide vorzuschlagen, die hinsichtlich der damit erzielten Farbeffekte eine größere Variationsbreite aufweist.

Diese Aufgabe wird durch die Merkmalskombination des Anspruches 1 gelöst. Danach enthält die Minengrundmasse wenigstens einen Farbstoff und wenigstens einen mit diesem als Reaktionspartner zusammenwirkenden Stoff, wobei der Reaktionspartner in der Lage ist, in wässeriger Lösung eine Farbänderung des Farbstoffs zu bewirken. Dadurch, daß zumindest der Reaktionspartner in der im wesentlichen wasserfreien Grundmasse in fester Form vorliegt, ist eine Reaktion und damit eine Farbveränderung ausgeschlossen. Erst beim Aquarellieren eines mit der Farbstiftmine oder der Kreide - im folgenden wird kurz von Farbstoffmine gesprochen - erzeugten Abstriches wird der Grundmasse so viel Wasser zugeführt, daß eine Reaktion und damit eine Farbveränderung erfolgen kann. Der Minengrundmasse können neben veränderbaren Farbstoffen auch vom Reaktionspartner nicht beeinflussbare Farbmittel beigemischt sein, um bestimmte Farbnuancierungen oder Farbmischungen zu erreichen. Die Farbveränderung kann prinzipiell auf unterschiedliche Weise bewirkt werden. Bei einer bevorzugten Variante wird als veränderbarer bzw. einen Farbwechsel aufweisender Farbstoff ein Säure-Base-Indikator verwendet, der mit dem Reaktionspartner in wässriger Lösung ein protolytisches System bildet. So wird beispielsweise ein Farbstoff wie Methylrot bzw. dessen wasserlösliches Na-Salz und als Reaktionspartner eine Säure, etwa Zitronensäure eingesetzt. Die Säure löst sich beim Aquarellieren in Wasser auf und verschiebt den pH-Wert in den sauren Bereich, wodurch die ursprünglich gelbe Minenfarbe nach Rot umschlägt. Eine weitere bevorzugte Möglichkeit für einen Farbwechsel besteht in der Kombination eines Redoxindikators mit einem Reduktions- oder Oxidationsmittel. Damit kann je nach Konzentration des Raktionspartner eine Farblöschung oder auch eine mehr oder weniger starke Farbveränderung erreicht werden. So ist es beispielsweise denkbar, daß sich die Minenfarbe durch Mischung von mehreren Farbstoffen ergibt, wobei einer der Farbstoffe ein durch den Reaktionspartner vollständig entfärbbarer Redoxindikator ist. Nach dem Aquarellieren ergibt sich so eine der Mischung der unverändert gebliebenen Farbstoffe entsprechende Färbung. Denkbar ist auch, daß ein Säure-Base- und gleichzeitig Redox-Indikator nebst den entsprechenden Reaktionspartnern in der Minenmasse vorhanden sind.

Neben den genannten Farbstoff- Reaktionspartner-Kombinationen können auch solche eingesetzt werden, bei denen der Reaktionspartner eine bathochrome Gruppe enthält, die sich in wässriger Lösung an einen Farbstoff anlagert und eine Farbveränderung bzw. Farbverschiebung bewirkt. Weiterhin können Komplexbildner als Farbstoffe eingereicht werden, die mit dem Metallion eines Salzes als Reaktionspartner einen gefärbten Komplex bilden.

Die Erfindung wird nun anhand einiger Ausführungsbeispiele näher erläutert:

### Beispiel 1:

| | |
|---|---|
| Polyethylenglykol (relative Molmasse 6000) | 25 Gewichts% |
| Kaolin | 22 Gewichts% |
| Talkum | 15 Gewichts% |
| Stearinsäure | 12 Gewichts% |
| Natriumstearat | 10 Gewichts% |
| FD&C-Green 3 (C.I. 42053) | 6 Gewichts% |
| Natriumcarbonat | 5 Gewichts% |
| CAS-Nr. 9004-99-3: | 5 Gewichts% |

Die Bestandteile dieser Minenmasse werden auf übliche Weise mit Hilfe eines Kneters - ohne Wasserzusatz - vermischt und zu Minen extrudiert. Diese ergeben auf Papier einen Abstrich, dessen grüne Farbe beim Vermalen mit Wasser nach Violett umschlägt. Bei dem Minenmassenbestandteil CAS-Nr. 9004-99-3 handelt es sich um eine wasserlösliche wachsartige Mischung von Fettsäurepolyglykolestem mit Stearinsäurepolyglykolester als Hauptbestandteil.

### Beispiel 2:

Eine Kreide oder Mine mit einem Indikator, der im sauren pH-Bereich einen Farbumschlag zeigt, kann durch folgende Rezeptur erhalten werden:

| | |
|---|---|
| Polyethylenglykol (relative Molmasse 6000) | 25 Gewichts% |
| Stearinsäure | 12 Gewichts% |
| CAS-Nr. 9004-99-3 | 5 Gewichts% |
| Kaolin | 25 Gewichts% |
| Talkum | 15 Gewichts% |
| Natriumstearat | 10 Gewichts% |
| Methylrot | 6 Gewichts% |
| Zitronensäure | 2 Gewichts% |

Wird ein mit der vorliegenden Kreide applizierter Abstrich auf Papier mit Wasser vermalt, so löst sich die Säure auf und verschiebt den pH-Wert in den sauren Bereich. Die ursprünglich gelbe Abstrichfarbe schlägt nach Rot um.

### Beispiel 3:

Die folgende Zusammensetzung eignet sich insbesondere für Kreiden, beispielsweise mit einem Durchmesser von 10 mm. Die Herstellung erfolgt entsprechend Beispiel 1.

| | |
|---|---|
| Alkoholpolyglykolether | 50 Gewichts% |
| Kaolin | 38 Gewichts% |
| Acid Blue 93 (C.I. 42780) | 9 Gewichts% |
| Natriumdithionit | 2 Gewichts% |
| Pigment Yellow 74 (C.I. 11741) | 1 Gewichts% |

Die Kreiden zeigen einen blaugrünen Abstrich. durch Aquarellieren mit Wasser, verändert sich der Farbton des Abstrichs nach blaßgelb. Die Farbveränderung kommt dadurch zustande, daß der Farbstoff Acid Blue 93 durch das Reduktionsmittel entfärbt wird, der Farbstoff Pigment Yellow 74 dagegen unverändert bleibt. Als günstig erweist bei Zusammensetzungen dieser Art, wenn geringe Spuren einer alkalisch wirkenden Substanz, etwa Natriumcarbonat, zugesetzt sind.

### Beispiel 4:

| | |
|---|---|
| Kaolin | 30 Gewichts% |
| Stearinsäure | 100 Gewichts% |
| Titandioxid | 10 Gewichts% |
| Phenolphthalein | 10 Gewichts% |
| Natriumstearat | 6 Gewichts% |
| Fettalkoholpolyglykolether | 32 Gewichts% |
| Natriumcarbonat | 2 Gewichts% |

Die mit einer solchen Masse hergestellten Minen zeigen einen weißen Abstrich, der beim vermalen mit Wasser nach Rosa umschlägt.

## Patentansprüche

1. Farbstiftmine oder Kreide mit einer zumindest teilweise wasserlöslichen oder in Wasser suspendierbaren, im wesentlichen wasserfreien Grundmasse, die wenigstens einen Farbstoff und wenigstens einen in fester Form vorliegenden Reaktionspartner enthält, wobei dieser in wässriger Lösung eine Farbänderung des Farbstoffs bewirkt

2. Farbstiftmine oder Kreide nach Anspruch 1,
dadurch gekennzeichnet, daß ein weiteres, vom Reaktionspartner nicht veränderbares Farbmittel enthalten ist.

3. Farbstiftmine oder Kreide nach Anspruch 1 oder 2,
dadurch gekennzeichnet, daß der Farbstoff ein Säure-Base-Indikator und der Reaktionspartner eine Säure oder Base ist.

4. Farbstiftmine oder Kreide nach einem der Ansprüche 1 bis 3,
gekennzeichnet durch wenigstens einen Farbindikator aus der Gruppe FD&C-Green 3 [C.I. 42053], Phenolphthalein [CAS 77-09-8], Thymolblau [CAS 76-61-9], Thymolphthalein [CAS 125-20-2], Bromkresolpurpur [CAS 115-40-2], Natriumsalz der 3-Oxypyrentrisulfonsäure [C.I. 59040], Neutralrot [C.I. 50040], Methylrot [C.I. 13020], Alizarinrot S [C.I. 58005], oder Fluorescin [C.I. 45350].

5. Farbstiftmine oder Kreide nach Anspruch 3 oder 4,
gekennzeichnet durch wenigstens eine Base aus der Gruppe Alkalicarbonate, Alkaliphosphate und Alkaliacetate.

6. Farbstiftmine oder Kreide nach Anspruch 3 oder 4,
gekennzeichnet durch wenigstens eine Säure aus der Gruppe Alkalihydrogensulfat, Alkalidihydrogenphosphat, Bernsteinsäure, Weinsäure und Zitronensäure.

7. Farbstiftmine oder Kreide nach Anspruch 1 oder 2,
dadurch gekennzeichnet,
daß der Farbstoff ein Redox-Indikator und der Reaktionspartner ein Reduktions- oder Oxidationsmittel ist.

8. Farbstiftmine oder Kreide nach Anspruch 7,
gekennzeichnet durch Natriumdithionit als Reduktionsmittel.

9. Farbstiftmine oder Kreide nach Anspruch 7 oder 8,
gekennzeichnet durch
wenigstens einen Redoxindikator aus der Gruppe:
| | |
|---|---|
| Indigocarmin | [C.I. 73015] |
| Methylenblau | [C.I. 52015] |
| Neutralrot | [C.I. 50040] |
| Amidoschwarz 10B | [C.I. 20470] |
| Acid Blue 93 : 1 | [C.I. 42780 : 1] |
| Acid Blue 93 | [C.I. 42780] |

10. Farbstiftmine oder Kreide nach einem der Ansprüche 1 bis 9,
gekennzeichnet durch
eine Grundmasse auf Wachsbasis mit zumindest teilweise wasserlöslichen Emulgatoren.

## Revendications

1. Mine de crayon de couleur ou craie, comprenant une composition de base sensiblement anhydre, au moins partiellement soluble dans l'eau ou pouvant être mise en suspension dans l'eau, qui contient au moins un colorant et au moins un partenaire de réaction se présentant sous forme solide, celui-ci provoquant en solution aqueuse une modification de la couleur du colorant.

2. Mine de crayon de couleur ou craie suivant la revendication 1, caractérisée en ce qu'elle contient une autre matière colorante qui ne peut pas être modifiée par le partenaire de réaction.

3. Mine de crayon de couleur ou craie suivant la revendication 1 ou 2, caractérisée en ce que le colorant est un indicateur acide-base et le partenaire de réaction est un acide ou une base.

4. Mine de crayon de couleur ou craie suivant l'une des revendications 1 à 3, caractérisée par au moins un indicateur coloré choisi dans le groupe FD&C-Green 3 [C.I. 2053], la phénolphtaléine [CAS 77-09-8], le bleu de thymol [CAS 76-61-9], la thymolphtaléine [CAS 125-20-2], le pourpre de bromocrésol [CAS 115-40-2], le sel sodique de l'acide 3-hydroxypyrènetrisulfonique [C.I. 59040], le rouge neutre [C.I. 50040], le rouge méthyle [C.I. 13020], le rouge d'alizarine S [C.I. 58005], ou la fluorescéine [C.I. 45350].

5. Mine de crayon de couleur ou craie suivant la revendication 3 ou 4, caractérisée par au moins une base choisie parmi les carbonates de métal alcalin, les phosphates de métal alcalin et les acétates de métal alcalin.

6. Mine de crayon de couleur ou craie suivant la revendication 3 ou 4, caractérisée par au moins un acide choisi parmi les hydrogénosulfates de métal alcalin, les dihydrogénophosphates de métal alcalin, l'acide succinique; l'acide tartrique et l'acide citrique.

7. Mine de crayon de couleur ou craie suivant la revendication 1 ou 2, caractérisée en ce que le colorant est un indicateur rédox et le partenaire de réaction est un agent réducteur ou un agent oxydant.

8. Mine de crayon de couleur ou craie suivant la revendication 7, caractérisée par du dithionite de sodium comme agent réducteur.

9. Mine de crayon de couleur ou craie suivant la revendication 7 ou 8, caractérisée par au moins un indicateur rédox choisi parmi:
| | |
|---|---|
| le carmin indigo | [C.I. 73015] |
| le bleu de méthylène | [C.I. 52015] |
| le rouge neutre | [C.I. 50040] |
| l'amido noir 10B | [C.I. 20470] |
| le bleu acide 93:1 | [C.I. 42780:1] |
| le bleu acide 93 | [C.I. 42780]. |

10. Mine de crayon de couleur ou craie suivant l'une des revendications 1 à 9, caractérisée par une composition de base à base de cire avec des émulsionnants au moins partiellement solubles dans l'eau.

## Claims

1. Coloured pencil lead or chalk having a base composition which is at least partly soluble in water or suspensible in water, is substantially free of water, and comprises at least one dye and at least one solid co-reactant which in aqueous solution brings about a colour change of the dye,

2. Coloured pencil lead or chalk according to Claim 1, characterized in that a further colorant is present which cannot be changed by the co-reactant.

3. Coloured pencil lead or chalk according to Claim 1 or 2, characterized in that the dye is an acid/base indicator and the co-reactant is an acid or base.

4. Coloured pencil lead or chalk according to one of Claims 1 to 3, characterized by at least one colour indicator from the group consisting of FD&C Green 3 [C.I. 42053], phenolphthalein [CAS 77-09-8], thymol blue [CAS 76-61-9], thymolphthalein [CAS 125-20-2], bromcresol purple [CAS 115-40-2], the sodium salt of 3-hydroxypyrenetrisulphonic acid [C.I. 59040], neutral red [C.I. 50040], methyl red [C.I. 13020], alizarin red S [C.I. 58005] and fluorescein [C.I. 45350].

5. Coloured pencil lead or chalk according to Claim 3 or 4, characterized by at least one base from the group consisting of alkali metal carbonates, alkali metal phosphates and alkali metal acetates.

6. Coloured pencil lead or chalk according to Claim 3 or 4, characterized by at least one acid from the group consisting of alkali metal hydrogen sulphate, alkali metal dihydrogen phosphate, succinic acid, tartaric acid and citric acid.

7. Coloured pencil lead or chalk according to Claim 1 or 2, characterized in that the dye is a redox initiator and the co-reactant is a reducing or oxidizing agent.

8. Coloured pencil lead or chalk according to Claim 7, characterized by sodium dithionite as reducing agent.

9. Coloured pencil lead or chalk according to Claim 7 or 8, characterized by at least one redox indicator from the following group:
| | |
|---|---|
| Indigo carmine | [C.I. 73015] |
| Methylene blue | [C.I. 52015] |
| Neutral red | [C.I. 50040] |
| Amido black 10B | [C.I. 20470] |
| Acid Blue 93:1 | [C.I. 42780:1] |
| Acid Blue 93 | [C.I. 42780] |

10. Coloured pencil lead or chalk according to one of Claims 1 to 9, characterized by a base composition based on wax with at least partly water-soluble emulsifiers.
